Europäisches Patentamt

(19) European Patent Office

Office européen des brevets

(11) Publication number: **0 242 455**
**A1**

## (12) EUROPEAN PATENT APPLICATION

(21) Application number: **86302572.2**

(22) Date of filing: **07.04.86**

(51) Int. Cl.⁴: **F16K 11/22**

The title of the invention has been amended (Guidelines for Examination in the EPO, A-III, 7.3).

Amended claims in accordance with Rule 86 (2) EPC.

(43) Date of publication of application:
**28.10.87 Bulletin 87/44**

(84) Designated Contracting States:
**AT BE CH DE FR GB IT LI LU NL SE**

(71) Applicant: **Mazzei, Domonic**
**6 Cynthia Street**
**Thorold Ontario, L2V 1W7(CA)**

(72) Inventor: **Mazzei, Domonic**
**6 Cynthia Street**
**Thorold Ontario, L2V 1W7(CA)**
Inventor: **Pilon, Reni**
**38 First Avenue**
**La Salle Quebec, H8P 2E5(CA)**

(74) Representative: **Geldard, David Guthrie et al**
**URQUHART-DYKES AND LORD Tower House**
**Merrion Way**
**Leeds West Yorkshire LS2 8PA(GB)**

(54) Faucet and valve assembly therefor.

(57) A faucet assembly (28) for controlling supply of water to either a washing machine or a laundry tub comprises a pair of inlets (24, 26) each of which is selectively connectable to one of two outlets (32 or 34, 36). A valve member (88) is associated with each of said inlets, and is movable from a first position in which said respective inlet is connected to one of said outlets to a second position in which said inlet is connected to the other of said outlets. The valve member is movable to a third position in which flow to both said outlets is prevented.

FIG 2

The present invention relates to faucet assemblies and in particular to fauncet assemblies that may be used in conjunction with washing machines for controlling flow from a domestic supply to a washing machine.

It is common practice to install a washing machine adjacent a laundry tub. The washing machine and laundry tub are each supplied with hot and cold water and the supply of water to the laundry tub is controlled by a faucet mounted on the tub. The water supply for the washing machine faucet is taken from the tub supply conduit to the tub through a T piece and a separate faucet is mounted in each of the machines supply lines.

This arrangement whilst functioning satisfactorily in theory tends to be cumbersome and expensive in practice. The installation requires the use of Tee fittings in the main conduit and separate faucets to control supply to both the machine and to the tub. The faucets in the line to the machine are required to prevent flooding of the machine in the event that the check valves in the washing machine fail but are infrequently used due to their cumbersome operating mechanism and isolated location. Moreover the conventional installation is visually unattractive because of the use of multiple components which need to be located in a position to which access may be gained. Whilst these disadvantages exist, the known arrangements, are nevertheless standard throughout the construction industry.

It is therefore an object of the present invention to provide a faucet assembly on which the above disadvantages are obviated or mitigated.

According therefore to the present invention there is provided a faucet assembly comprising a pair of inlets each of which is selectively connectable to one of two outlets and a valve member associated with each of said inlets, each of said valve members being movable from a first position in which flow of said respective inlet is connected to one of said outlets to a second position in which said inlet is connected to the other of said outlets.

By using the faucet assembly described above it is possible to have a single assembly mounted on the laundry tub in a conventional manner that may be used to direct water to either the machine or the tub. Preferably the movement from the two alternative positions is achieved by simple rotation of the valve member so that disconnection of the machine is convenient to achieve.

It is also preferred that a third position be provided for the valve member to prevent flow to both of the outlets so that both the tub and the machine can be disconnected at the same time.

Embodiments of the invention will now be described by way of example only with reference to the accompanying drawings in which,

Figure 1 is a schemmatic illustration of the installation of a machine and laundry tub.

Figure 2 is an exploded perspective view of a faucet assembly showing the various components used in that assembly,

Figure 3 is a perspective view showing the underside of the assembled valve member as used in the faucet of figure 2,

Figure 4 is a view similar to figure 3 showing the top perspective view of the assembled valve member,

Figure 5 is a sectional view of one half of the assembled faucet taken along the line 5-5 of figure 2,

Figure 6 is a diagrammatic representation of the alternative positions of the valve member in the faucet of figure 2 and,

Figure 7 is an end view of an alternative embodiment of the faucet of figure 2 showing an alternative type of connection.

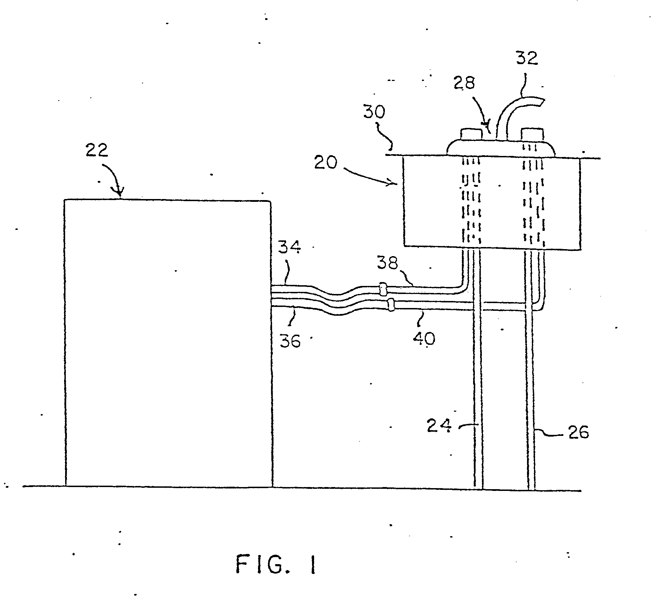

Referring now to the drawings and in particular to figure 1 a domestic laundry installation includes a laundry tub 20 and a washing machine 22. Water is supplied to the laundry installation through hot and cold conduits 24 - 26 respectively located beneath the tub 20 and connected to a faucet assembly 28. The faucet assembly 28 is mounted on the rim 30 of the tub 20 in a conventional manner and supplies water to the tub 20 through a spout 32. The washing machine 22 has a pair of flexible inlet conduits 34 - 36 respectively that are connected by means of conduits 38 - 40 through the faucet assembly 28 to the hot and cold water pipes 24 - 26.

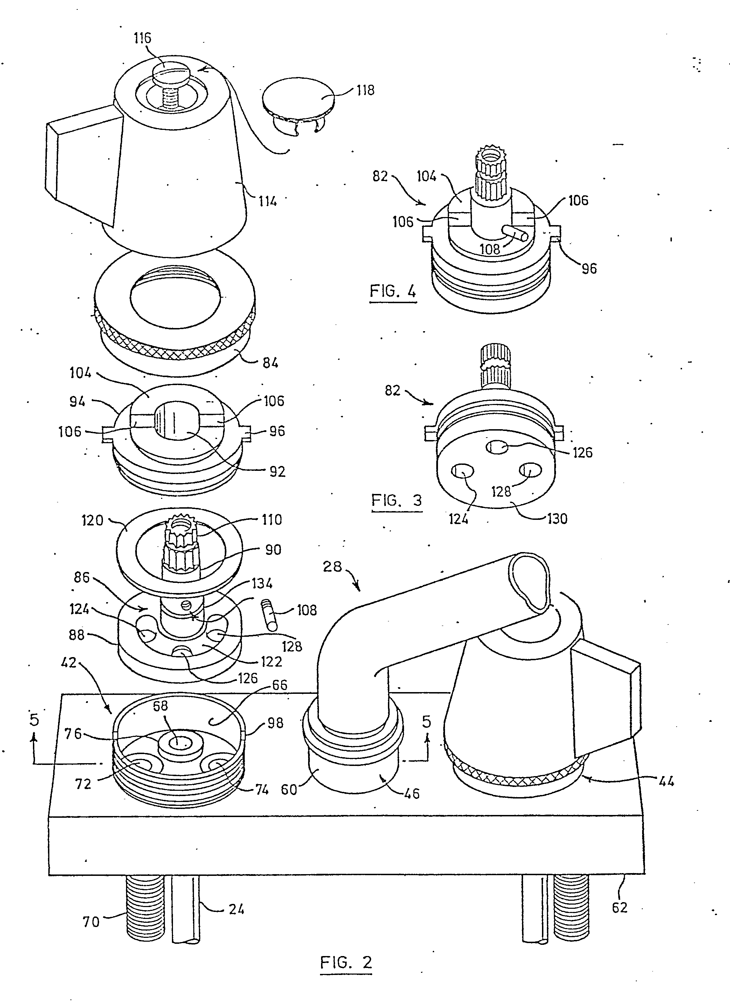

The details of the faucet assembly 28 may best be seen from figures 2 through 5. The faucet assembly 28 comprises a pair of valve housings 42-44 located on opposite sides of a central chamber 46 and rigidly connected thereto by means of tubes 48 - 50. The chamber 46 has an internal cavity 52 communicating through lateral bores 54 with the interior of the tubes 48 - 50 and counterbored to receive the lower end of the spout 32.

A check valve 64 is also located within the chamber 46 to seal one of the tubes 48 - 50 in the event that water is supplied through only one of those tubes.

The spout 32 is sealed within the cavity 52 by means of an O ring 56 and retaining ring 58 and is retained in the chamber by means of a cap 60 that engages the retaining ring 58 and the threaded exterior of the chamber 56. The spout may therefore swing relative to the tub in the usual way. The cap 60 also serves to retain a skirt 62 that extends around the valve housings 42 - 44 and down to the rim 30 of the tub 20 to conceal the housings and chamber 46.

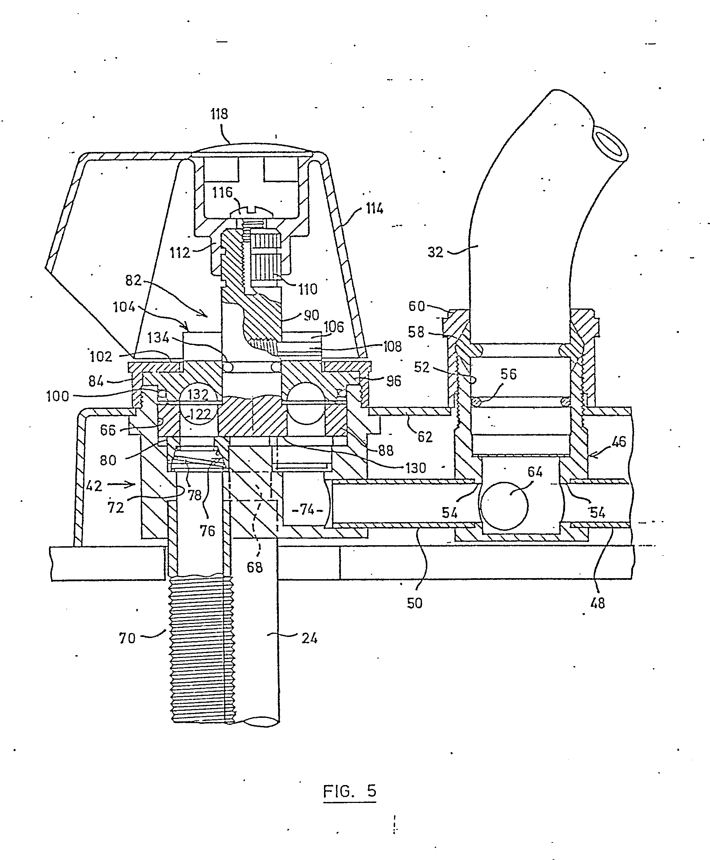

Each of the valve housings and the components associated therewith are identical and only one will therefore be discussed in detail. As may best be seen in figure 5, each valve housing 42 - 44 is counterbored to provide an internal cavity 66. The supply conduit 24 communicates with the cavity 66 through a bore 68. An outlet tube 70 is provided for connection to one of the conduits 38 - 40 and communicates with the cavity 66 through a bore 72. An internal passageway 74 is provided to connect the interior of the tube 50 to the cavity 66. A resilient seal member 76 comprising a spring 78 and a neoprene seal 80 is located in each of the bores 68 - 70 and passageway 74 within the cavity 66.

A valve assembly generally designated 82 is located within the cavity 66 and retained by means of a threaded cap 84. The valve assembly 82 includes a valve member 86 having a valve plate 88 and an upstanding stem 90. The stem 90 is rotatably received within a bore 92 extending through a valve body 94 that is provided with a pair of lateral tangs 96. An O-ring 134 seals between the stem 90 and bore 92 and the tangs 96 are received in corresponding recesses 98 in the valve housing 42 to prevent rotation of the body 94 relative to the housing 42. An O ring 100 seals between the valve body 94 and the wall of the cavity 66 and a radially extending lip 102 of the cap 84 retains the valve body in the housing 42. A semi-circular formation 104 having a pair of vertical abutment surfaces 106 is formed on the upper surface of the valve body 94 around the bore 92 to co-operate with a pin 108 received in the stem 90 and limit rotation of the stem relative to the valve body.

The upper end of stem 90 is splined as shown at 110 to receive an internally splined boss 112 formed on the interior of a handle 114. The handle 114 is secured to the stem 90 by a screw 116 that is concealed by a cover plate 118.

The undersurface of the valve body 94 and upper surface of the valve plate 88 lie adjacent one another and are separated by means of an annular friction reducing ring 120. A semi-circular recess 122 is provided in the upper surface of the plate 88 and has three ports 124, 126 and 128 respectively spaced apart along the length of the recess. Each of the ports 124, 126 and 128 extends through the plate 88 to its undersurface 130. The undersurface 130 is planar and rests in sealing relationship with each of the seal members 76. The undersurface of the valve body 94 is formed with an annular recess 132 overlying the semi-circular recess 122 to enlarge the passageway provided by the recess 122 between the ports 124, 126, 128.

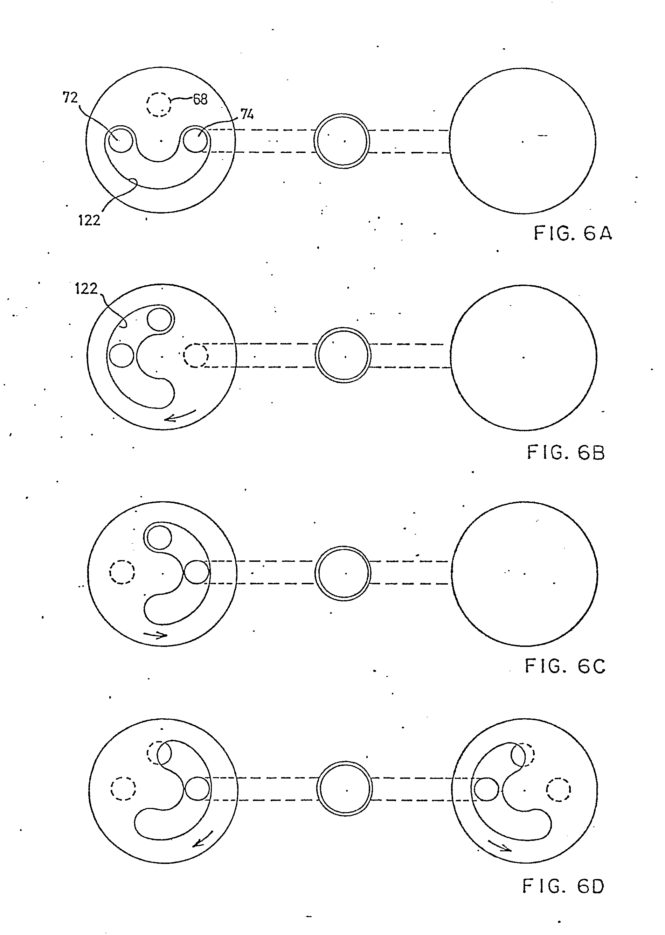

The valve member 86 may be moved relative to the valve body to one of three positions as shown in figure 6. In the first of these positions as shown in figure 6A the valve member is positioned so that the sealing surface 130 of the valve plate 88 overlies the bore 68 with pin 90 located intermediate the abutment surfaces 106 so that the valve member may be rotated in either direction.. In this position the semi-circular recess 122 extends between the bore 72 and the passageway 74. But because the bore 68 is sealed by the surface 130 water is not able to flow from the inlet 34 to either of the outlet tubes 70 or the internal passageway 74. Thus both the tub and the machine 20 - 22 are effectively isolated.

Upon rotation of the valve member clockwise as viewed from above the valve plate and valve body are moved into the relationship shown in figure 6B. In this position, the port 124 is in register with the bore 68 and the port 126 is in register with the bore 72. Fluid is thus able to flow from the inlet 34 to the outlet tube 70 and into the washing machine 22. The sealing surface 130 overlaps the internal passageway 74 to prevent water flowing to the tub.

Upon rotation of the valve member anticlockwise the plate is brought into the position of figure 6C. In this position, the bore 68 is in register with the port 128 and the internal passageway 74 is in register with the port 126. The bore 72 is sealed by the sealing face 130 so that water flows from the inlet 34 through the passageway 74 and tube 50 to the spout 32. Thus water may be supplied to the tub 20. The flow of water to either of the outlets may be metered by varying the register between the port 124 - 128 and the bore 68 in the manner shown in figure 6D. It will also be appreciated, as illustrated in figure 6D that each of the valve assemblies is independently moveable to provide any combination of water supply to the machine or tub.

It will be observed that the bores 68 - 72 and internal passage 74 are offset from the axis of rotation of the valve member 86 to permit the inlet 34 and the outlet tube 70 to be accommodated within a standard opening and in the rim of a laundry tub. It will also be observed that by virtue of the arrangement of the valve member it is not necessary to provide separate components to control the flow to the machine or to provide T members in the supply line.

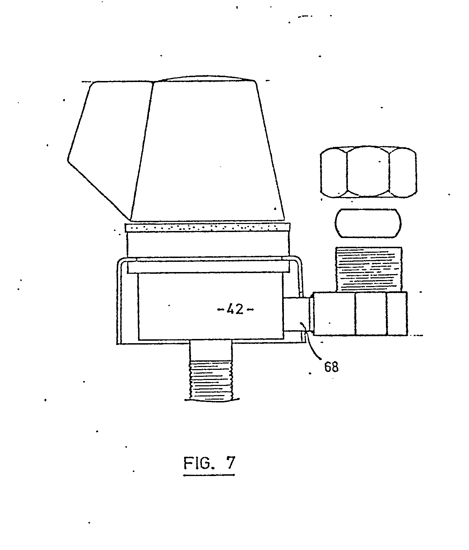

An alternative arrangement of connection is shown in figure 7 to permit supply of water from above the tub as is common in basement installations. In this arrangement, the bore 68 is arranged to pass through the peripheral wall of the housing 42 so that an elbow may be connected at the rear of the housing to allow connection to a vertical pipe.

Whilst the invention has been described with reference to a washing machine application it will be appreciated that it may be used in other applications where service is required to one of two outlets. For example, the unit could be used in a bathroom to control flow to either a tub or a shower nozzle and in this situation may be either wall or deck mounted. The ability of the valve to regulate flow from each inlet is of course beneficial in obtaining the desired temperature of water.

The valve assembly may also be used where a single inlet supplies a pair of outlets. For example the valve could be used to control flow to a water operated garbage disposal unit and to a sink in a kitchen without the need for more than one faucet. Clearly this is particularly advantageous as the controls for the disposal unit are conveniently at hand.

**Claims**

1. A faucet assembly comprising an inlet selectively connectable to one of two outlets and a valve member associated with said inlet, said valve member being movable from a first position in which said inlet is connected to one of said outlets to a second position in which said inlet is connected to the other of said outlets.

2. A faucet assembly according to claim 1 including a pair of inlets each of which is selectively connectable to one of two outlets and each of which has a valve member associated therewith and moveable between first and second positions.

3. A faucet assembly according to claim 2 wherein each valve member is moveable to a third position in which flow to both said outlets is prevented.

4. A faucet assembly according to claim 3 wherein each of said valve member moves through said third position in moving from said first to said second position.

5. A faucet assembly according to claim 2 wherein said first outlets associated with each of said inlets are connected to one another.

6. A faucet according to claim 4 wherein each of said valve members is rotatable about an axis to move from said first to said second position.

7. A faucet according to claim 6 wherein said inlets and said outlets are spaced from said axis of rotation.

8. A faucet according to claim 7 wherein said valve member includes a valve plate rotatable about said axis of rotation and having a sealing face in sealing engagement with said inlets and said outlets, said plate having a passageway therein to permit communication between said inlet and a selected one of said outlets.

9. A faucet asembly according to claim 8 wherein said valve plate includes a pair of ports extending through said plate from said sealing face to its opposite face and a conduit in said opposite face extending between said ports.

10. A valve assembly for a faucet, said valve assembly comprising a body with a valve plate rotatable therein about an axis, an inlet and an outlet in said valve body on one side of said valve plate and displaced from said axis, said valve plate having a surface in sealing engagement with said inlet and said outlet with a pair of ports in said surface extending from said surface to the opposite surface of said plate and passage means on said opposite side of said valve plate to connect said ports, said ports being moved into register with said inlet and said inlet by rotation of said valve plate in said body to permit flow from said inlet through said passage means to said outlet.

11. A valve assembly according to claim 10 wherein a further outlet is provided in said valve body, said valve plate having a further part therein and being rotatable to positions to connect either outlet to said inlet.

12. A valve assembly according to claim 11 wherein said inlet is located intermediate said outlets.

13. A valve assembly according to claim 12 wherein said inlet and said outlets are located equidistant from said axis.

Amended claims in accordance with rule 86(2) EPC.

1. A valve assembly for a faucet, said valve assembly comprising:

a body with a valve plate rotatable therein about an axis;

an inlet and a pair of outlets in said valve body on one side of said valve plate and displaced from said axis, said valve plate having a sealing surface in sealing engagement with said inlet and said outlets and having a passage therein, wherein said valve plate is movable to positions selected from a position wherein said passage is in register with said inlet and only one of said outlets to permit flow from said inlet to said one of said outlets and from a position wherein said passage is out of register with said inlet to inhibit flow from said inlet to said outlet; and

stop means to inhibit rotation of said valve plate, wherein said stop means inhibit rotation of said valve plate to a position wherein said passage is in register with said inlet and both of said outlets

2. A valve assembly according to claim 1 wherein said inlet is located intermediate said outlets.

3. A valve assembly according to claim 2 wherein said inlet and said outlets are located equidistant from said axis.

4. The valve assembly of claim 1 wherein said passageway comprises three ports extending from said sealing surface to the opposite surface of said plate and a recess on the opposite side of said valve plate to connect said ports.

FIG. 1

FIG. 4

FIG. 3

FIG. 2

FIG. 5

72 68 74

122

FIG. 6A

122

FIG. 6B

FIG. 6C

FIG. 6D

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | US-A-4 580 600 (MAZZEI)<br>* Whole document *<br><br>--- | 1-13 | F 16 K 11/22 |
| X | FR-A- 842 501 (ACHAUME)<br>* Whole document *<br><br>--- | 1-13 | |
| X | US-A-2 414 749 (LORRAINE)<br><br>* Column 1, line 50 - column 2, line 22; column 2, line 41 - column 3, line 11; figures *<br><br>--- | 1,3,4,<br>6-13 | |
| X | DE-A-3 301 589 (GLOOR)<br><br>* Whole document *<br><br>----- | 1,3,4,<br>6,7 | |

|  |  |  | TECHNICAL FIELDS SEARCHED (Int. Cl.4) |
|---|---|---|---|
|  |  |  | F 16 K |

The present search report has been drawn up for all claims

| Place of search | Date of completion of the search | Examiner |
|---|---|---|
| THE HAGUE | 27-11-1986 | LEMERCIER D.L.L. |